# EUROPEAN PATENT APPLICATION

(11) **EP 4 703 129 A1**
(43) Date of publication of application: **04.03.2026**
(21) Application number: 23935223.0
(22) Date of filing: 24.04.2023
(51) Int. Cl.: B29C 70/54, B26F 1/24, B29B 11/08, B29B 11/12, B29C 43/02, B29C 43/36, B29C 43/52, B29C 45/14, B29C 65/60, B29C 70/20, B29C 70/34, B29C 70/74, F16B 5/04, B29K 105/10

(54) **STRUCTURE MOLDING METHOD AND JOINING STRUCTURE**

(71) Applicant: Dai-ichi Dentsu Ltd., Tokyo 182-0034 (JP)
(72) Inventor: EGUCHI, Takeshi, Chofu-City, Tokyo 182-0034 (JP); NISHIYABU, Kazuaki, Higashiosaka-City, Osaka 577-8502 (JP)
(74) Representative: Viering, Jentschura & Partner mbB Patent- und Rechtsanwälte
(86) International application number: PCT/JP2023/016062
(87) International publication number: WO 2024/224440

(57) **Abstract**

A structural-body molding method capable of realizing an increase in the tensile strength of a joined structural body is provided. In addition, a joined structural body capable of realizing an increase in strength is provided. In the structural-body molding method, first and second pre-pregs 11f, 11s are provided within a cavity C in a setting process. With regard to the first and second pre-pregs 11f, 11s, a first direction, in which first carbon fibers 11b extend, and a second direction, in which second carbon fibers 11b extend, cross and they overlap in a specific area SA in a third direction that is orthogonal to the first direction and the second direction. In a mold-clamping process, a first mold 23 and a second mold 25 are clamped after the setting process. In a pressurizing process, the first and second pre-pregs 11f, 11s are pressurized within the cavity C so as to unite them. In an injecting process, an injection material 39 is injected into the cavity C. In a hole-forming process, a needle 27, starting from a tip portion 27a thereof, is caused to penetrate into the specific area SA in the third direction, and a connecting hole 51a is formed using the needle 27.

## Description

### TECHNICAL FIELD

The present invention relates to a structural-body molding method and a joined structural body.

### BACKGROUND ART

A previously existing joined structural body is disclosed in Patent Document 1. In this joined structural body, two structural bodies made of CFRP (carbon-fiber-reinforced plastic) comprising carbon fibers within a matrix composed of a thermoplastic resin or a thermosetting resin are joined by rivets.

Compared to structural bodies made of metal, structural bodies made of CFRP are lightweight and high strength, and also excel in fatigue characteristics and corrosion characteristics. In particular, because a joined structural body, in which a plurality of structural bodies made of CFRP is joined by rivets, does not require the use of an adhesive, it exhibits advantages such as shortened joining time and low cost as well as high durability, etc. Consequently, applications of joined structural bodies for components and the like in fields such as automobiles are widely expected.

### PRIOR ART LITERATURE

### Patent Documents

Patent Document 1
PCT International Publication No. WO 2012/117737

### SUMMARY OF THE INVENTION

### PROBLEMS TO BE SOLVED BY THE INVENTION

However, because the above-mentioned previously existing joined structural body is obtained by perforating two structural bodies with rivets, the carbon fibers in the respective structural bodies are easily cut by the rivets, and tensile strength in the direction along the joined surfaces of the structural bodies is thereby impaired.

In particular, in a joined structural body-in which carbon fibers in a first structural body extend in a first direction, carbon fibers in a second structural body extend in a second direction crossing the first direction, such as orthogonally to the first direction, and the first structural body and the second structural body are joined as described above-the carbon fibers in the first structural body are easily cut in the first direction by joining holes through which the rivets are passed, and the carbon fibers in the second structural body are also easily cut in the second direction by the same joining holes. Consequently, the tensile strength of the joined structural body adversely decreases in the first direction and the second direction.

The present invention was conceived in view of the above-mentioned previously existing circumstances, and an object of the present invention is to solve the problem of providing a structural-body molding method that can increase the tensile strength of a joined structural body. In addition, an object of the present invention is also to solve the problem of providing a joined structural body capable of realizing an increase in strength.

### MEANS FOR SOLVING THE PROBLEMS

A structural-body molding method according to a first teaching comprises:
a preparing process that prepares: a first pre-preg, which comprises a plurality of first carbon fibers that extend in one direction within a first matrix composed of a first thermoplastic resin; a second pre-preg, which comprises a plurality of second carbon fibers that extend in one direction within a second matrix composed of a second thermoplastic resin; a first mold; a second mold that, together with the first mold, forms a cavity; and a needle that has a pointed tip portion;
a setting process that: provides the first pre-preg within the cavity; and provides the second pre-preg within the cavity such that a first direction, in which the first carbon fibers extend, and a second direction, in which the second carbon fibers extend, cross and such that the first and second carbon fibers overlap, within a specific area, in a third direction orthogonal to the first direction and the second direction;
a mold-clamping process that clamps the first mold and the second mold after the setting process;
a pressurizing process that pressurizes the first pre-preg and the second pre-preg within the cavity, during the mold-clamping process or after the mold-clamping process, so as to unite them; and
a hole-forming process that causes the needle, starting from the tip portion thereof, to penetrate into the specific area in the third direction, during the pressurizing process or after the pressurizing process, and form a connecting hole using the needle.

In the molding method according to the first teaching, the first direction, in which the first carbon fibers extend, and the second direction, in which the second carbon fibers extend, are made to cross in the setting process and, in the mold-clamping process, the first pre-preg and the second pre-preg are united; thus, a structural body of a truss, etc. can be molded.

In particular, because the needle, starting from the pointed tip portion thereof, is caused to penetrate into the specific area, in which the first pre-preg and the second pre-preg overlap, in the third direction in the hole-forming process, the first carbon fibers in the first pre-preg are gradually pushed aside, within the first matrix, by the tip portion of the needle in directions radially outward of the needle, and the second carbon fibers in the second pre-preg are also gradually pushed aside, within the second matrix, by the tip portion of the needle in directions radially outward of the needle. Consequently, both the carbon fibers of the first pre-preg and the carbon fibers of the second pre-preg tend not to be cut. In this manner, a connecting hole, in which cutting of the surrounding carbon fibers was curtailed, is formed in the obtained structural body.

In addition, in the molding method according to the first teaching, because the hole-forming process is being carried out while the first pre-preg and the second pre-preg are restrained within the cavity, the method becomes an insert PCM (pre-preg compression molding) method, and the structural body tends not to deform and therefore has high dimensional accuracy.

A structural-body molding method according to a second teaching comprises:
a preparing process that prepares: a first pre-preg, which comprises a plurality of first carbon fibers that extend in one direction within a first matrix composed of a first thermoplastic resin; a first mold; a second mold that, together with the first mold, forms a cavity; a needle that has a pointed tip portion; and an injection material that contains a third thermoplastic resin and is injected into the cavity;
a setting process that provides the first pre-preg within the cavity;
a mold-clamping process that clamps the first mold and the second mold after the setting process;
a hole-forming process that causes the needle, starting from the tip portion thereof, to penetrate into a specific area of the first pre-preg in a third direction that is orthogonal to a first direction and form a connecting hole using the needle; and
an injecting process that injects the injection material into the cavity before the hole-forming process, during the hole-forming process, or after the hole-forming process.

In the molding method according to the second teaching, because the needle, starting from the pointed tip portion thereof, is caused to penetrate into the specific area of the first pre-preg in the third direction in the hole-forming process, the first carbon fibers in the first pre-preg are gradually pushed aside, within the first matrix, by the tip portion of the needle, in directions radially outward of the needle. Consequently, the carbon fibers of the first pre-preg tend not to be cut.

Because the injecting process is carried out before the hole-forming process, during the hole-forming process, or after the hole-forming process, the method becomes an insert injection-molding method, the first pre-preg and the injection material are integrally molded and the structural body has even greater utility. In particular, because the injection material is injected into the cavity, the injection material also molds the connecting hole, and the connecting hole can be prepared in a preferable shape. If the injecting process is carried out during the hole-forming process, then the first thermoplastic resin of the first pre-preg can be heated owing to the temperature of the injection material so that it softens, and the need to soften the first thermoplastic resin in the specific area during the hole-forming process can thereby be reduced or eliminated. In addition, if the injecting process is carried out during the hole-forming process, then the molding-cycle time of the structural body can be shortened, and manufacturing costs can thereby be reduced.

In this manner, the connecting hole, in which cutting of the surrounding carbon fibers is curtailed and which has a preferable shape, is formed in the obtained structural body.

Because the structural body obtained by the molding methods according to the first and second teachings is composed of thermoplastic resin and carbon fibers, the structural body is made of CFRTP (carbon-fiber-reinforced thermoplastic), which is also referred to as CFRP (carbon-fiber-reinforced plastic), and thus is high strength while being lightweight compared to a metal structural body and also excels in fatigue characteristics and corrosion characteristics.

A joined structural body according to a third teaching comprises:
the structural body obtained by the above-mentioned molding method; and an opposing material that is layered with the structural body and has an insertion hole that aligns with the joining hole;
wherein a rivet, which joins the structural body and the opposing material and comprises a plurality of fifth carbon fibers that extend in one direction within a fifth matrix composed of a fifth thermoplastic resin, is provided in the connecting hole and the insertion hole.

In the joined structural body according to the third teaching, because the structural body obtained by the first or second teaching and an opposing material are joined by a rivet, tensile strength in a direction along the joining surface of the structural body tends not to be impaired. In addition, this joined structural body does not require the use of an adhesive and therefore exhibits advantages such as shortened joining time and low cost as well as high durability, etc.

### EFFECTS OF THE INVENTION

According to the structural-body molding method of the present invention, a structural body capable of realizing an increase in the tensile strength of a joined structural body can be obtained. In addition, according to the joined structural body of the present invention, an increase in strength can be realized.

### BRIEF DESCRIPTION OF THE DRAWINGS

FIG. 1 is oblique views of pre-pregs.
FIG. 2 is a schematic, cross-sectional view showing a first mold, a second mold, and needles, during a preparing process, according to Working Example 1.
FIG. 3 is a schematic, cross-sectional view showing the first mold, the second mold, the needles, a first pre-preg, and a second pre-preg, during a setting process, according to Working Example 1.
FIG. 4 is a schematic, cross-sectional view showing the first mold, the second mold, the needles, the first pre-preg, and the second pre-preg, during a mold-clamping process and a pressurizing process, according to Working Example 1.
FIG. 5 is a schematic, enlarged, cross-sectional view of the first pre-preg and the second pre-preg, in the initial stage of the mold-clamping process and the pressurizing process, according to Working Example 1.
FIG. 6 is a schematic, enlarged, cross-sectional view of the first pre-preg and the second pre-preg, in the end stage of the mold-clamping process and the pressurizing process, according to Working Example 1.
FIG. 7 is a schematic, cross-sectional view showing the first mold, the second mold, the needles, the first pre-preg, and the second pre-preg, during a hole-forming process, according to Working Example 1.
FIG. 8 is a schematic, enlarged, cross-sectional view of the first pre-preg, the second pre-preg, and the needles, during the hole-forming process, according to Working Example 1.
FIG. 9 is an enlarged, cross-sectional view of the principal parts of a structural body obtained by the molding method of Working Example 1.
FIG. 10 is an enlarged plan view of a partial cross section showing the structural body obtained by the molding method of Working Example 1.
FIG. 11 is an enlarged rear view of a partial cross section showing the structural body obtained by the molding method of Working Example 1.
FIG. 12 is a plan view of the structural body obtained by the molding method of Working Example 1.
FIG. 13 is a cross-sectional view of the structural body, obtained by the molding method of Working Example 1, and an opposing material.
FIG. 14 is a cross-sectional view of the principal parts of a joined structural body according to Working Example 1.
FIG. 15 is a schematic, cross-sectional view showing a first mold, a second mold, and needles, during a preparing process, according to Working Example 2.
FIG. 16 is a schematic, cross-sectional view showing the first mold, the second mold, the needles, and a first pre-preg, during a setting process and a mold-clamping process, according to Working Example 2.
FIG. 17 is a schematic, cross-sectional view showing the first mold, the second mold, the needles, the first pre-preg, and an injection material, during an injecting process and a hole-forming process, according to Working Example 2.
FIG. 18 is a cross-sectional view of two structural bodies, obtained by the molding method of Working Example 2, and an opposing material.
FIG. 19 is a cross-sectional view of the principal parts of a joined structural body according to Working Example 2.
FIG. 20 is a schematic, cross-sectional view showing a first mold, a second mold, and needles, during a preparing process, according to Working Example 3.
FIG. 21 is a schematic, cross-sectional view showing the first mold, the second mold, the needles, a first pre-preg, and a second pre-preg, during a setting process, according to Working Example 3.
FIG. 22 is a schematic, cross-sectional view showing the first mold, the second mold, the needles, the first pre-preg, and the second pre-preg, during a mold-clamping process and a pressurizing process, according to Working Example 3.
FIG. 23 is a schematic, cross-sectional view showing the first mold, the second mold, the needles, the first pre-preg, the second pre-preg, and an injection material, during an injecting process and a hole-forming process, according to Working Example 3.
FIG. 24 is a cross-sectional view of a structural body, obtained by the molding method of Working Example 3, and an opposing material.
FIG. 25 is a cross-sectional view of the principal parts of a joined structural body according to Working Example 3.

### MODES FOR CARRYING OUT THE INVENTION

In the first to third teachings, polyethylene (PE), polypropylene (PP), polyvinyl chloride (PVC), polystyrene (PS), polyvinyl acetate (PVAC), polyurethane (PUR), polytetrafluoroethylene (PTFE), acrylonitrile butadiene styrene (ABS) resin, acrylonitrile styrene copolymer (AS resin), acrylic (PMMA) resin, polyamide (PA), polyacetal (POM), polycarbonate (PC), modified polyphenylene ether (modified PPE), polyethylene terephthalate (PET), polybutylene terephthalate (PBT), cyclic polyolefin (COP), polyphenylene sulfide (PPS), polysulfone (PSF), polyether sulfone (PES), amorphous polyarylate (PAR), polyaryletherketone (PAEK), polyetherketoneketone (PEKK), polyetheretherketone (PEEK), thermoplastic polyimide (PI), polyamide-imide (PAI), and the like can be used as the first thermoplastic resin constituting the first matrix of the first pre-preg, the second thermoplastic resin constituting the second matrix of the second pre-preg, the third thermoplastic resin constituting the injection material, the fourth thermoplastic resin capable of constituting the needle(s), and the fifth thermoplastic resin constituting the fifth matrix of the rivet(s). The first to fifth thermoplastic resins may be the same kind or may be of different kinds.

In the first to third teachings, the first, second, fourth, and fifth carbon fibers are filaments. The first, second, fourth, and fifth carbon fibers may be PAN (polyacrylonitrile)-based or pitch-based. In addition, the first, second, fourth, and fifth carbon fibers may be of the same diameter or may be of different diameters. In addition, the number of first carbon fibers that the first pre-preg comprises, the number of second carbon fibers that the second pre-preg comprises, the number of fourth carbon fibers that the needle(s) can comprise, and the number of fifth carbon fibers that the rivet(s) comprise(s) may be the same or may be different; and the density of the first carbon fibers that the first pre-preg comprises, the density of the second carbon fibers that the second pre-preg comprises, the density of the fourth carbon fibers that the needle(s) can comprise, and the density of the fifth carbon fibers that the rivet(s) comprise(s) may be the same or may be different.

In the first and second teachings, the first and second pre-pregs may be ones in which the carbon fibers are completely impregnated with thermoplastic resin or may be so-called semi-pregs in which the carbon fibers are incompletely impregnated. The first and second pre-pregs may be rods that are prism-shaped, cylindrical-shaped, or the like, or may be sheets. A third pre-preg, a fourth pre-preg, or the like, similar to the first and second pre-gregs, can also be used. In addition, the shape of the structural body is not limited with respect to the molding direction in the first and second teachings.

In the first teaching, the pressurizing process may be performed during the mold-clamping process or may be performed after the mold-clamping process. If the pressurizing process is carried out during the mold-clamping process, then the molding-cycle time of the structural body can be shortened, and manufacturing costs can thereby be reduced. If the pressurizing process is carried out after the mold-clamping process, then the pressurizing force is easily adjusted.

In the first teaching, the hole-forming process may be carried out during the pressurizing process or may be carried out after the pressurizing process. If the hole-forming process is carried out during the pressurizing process, then the molding-cycle time of the structural body can be shortened, and manufacturing costs can thereby be reduced.

In the first teaching, the injection material that contains the third thermoplastic resin and is injected into the cavity can be prepared in the preparing process. Furthermore, the molding method preferably comprises the injecting process in which the injection material is injected into the cavity before the hole-forming process, during the hole-forming process, or after the hole-forming process. In this situation, the molding method is an insert injection-molding method, and the first pre-preg and the second pre-preg will not only be united, but also molded by the injection material, thereby further increasing utility. In particular, because the injection material is injected into the cavity, the injection material also molds the connecting hole(s), and the connecting hole(s) can be prepared in a preferable shape. If the injecting process is carried out during the hole-forming process, then the first thermoplastic resin of the first pre-preg and the second thermoplastic resin of the second pre-preg can be heated owing to the temperature of the injection material so as to soften them, and the need to soften the first thermoplastic resin and the second thermoplastic resin in the specific area during the hole-forming process can thereby be reduced or eliminated. In addition, if the injecting process is carried out during the hole-forming process, then the molding-cycle time of the structural body can be shortened, and manufacturing costs can thereby be reduced.

In the first teaching, it is preferable that the third thermoplastic resin has a higher melting point than the first thermoplastic resin and the second thermoplastic resin. In this situation, the first thermoplastic resin and the second thermoplastic resin are reliably softened or melted owing to the temperature of the injection material, unification of the structural body increases, and the dimensional accuracy of the structural body that contains the connecting hole(s) becomes high.

In the first teaching, it is preferable that the first thermoplastic resin and the second thermoplastic resin in the specific area are heated in the pressurizing process so that they soften. In this situation, the first matrix of the first pre-preg and the second matrix of the second pre-preg are more easily united. The heating temperature is preferably equal to or greater than the heat deflection temperature of at least one of the first thermoplastic resin and the second thermoplastic resin. It may be equal to or less than the melting point of at least one of the first thermoplastic resin and the second thermoplastic resin.

In the first teaching, it is preferable that the first thermoplastic resin and the second thermoplastic resin in the specific area are heated in the hole-forming process so that they soften. In the situation in which the injection process is not carried out before the hole-forming process or during the hole-forming process, the first and second carbon fibers will tend to be moved within the first and second matrices by the tip portion(s) of the needle(s), and thus will further tend not to be cut. The heating temperature is preferably equal to or greater than the heat deflection temperature of at least one of the first thermoplastic resin and the second thermoplastic resin. It may be equal to or less than the melting point of at least one of the first thermoplastic resin and the second thermoplastic resin.

In the second teaching, it is preferable that the third thermoplastic resin has a higher melting point than the first thermoplastic resin. In this situation, the first thermoplastic resin is softened or melted owing to the temperature of the injection material, unification of the structural body increases, and the dimensional accuracy of the structural body that contains the connecting hole(s) becomes high.

In the second teaching, the second pre-preg, which comprises a plurality of second carbon fibers extending in one direction within the second matrix constituted from the second thermoplastic resin, can be prepared in the preparing process. In addition, in the setting process, it is preferable that the second pre-preg is provided in the cavity so that the first direction, in which the first carbon fibers extend, and the second direction, in which the second carbon fibers extend, cross and overlap in the third direction in the specific area. Furthermore, in the hole-forming process, it is preferable to cause the needle(s), starting from the tip portion(s) thereof, to penetrate into the specific area in the third direction and form the connecting hole(s) using the needle(s). In this situation, the connecting hole(s) can be formed in the structural body, which contains the first pre-preg and the second pre-preg in a united manner.

In the second teaching, it is preferable that the third thermoplastic resin has a higher melting point than the first thermoplastic resin and the second thermoplastic resin. In this situation, the first and second thermoplastic resins are softened or melted owing to the temperature of the injection material, unification of the structural body increases, and the dimensional accuracy of the structural body that contains the connecting hole(s) becomes high.

In the second teaching, it is preferable that the first pre-preg and the second pre-preg are pressurized so as to unite them in the cavity during the mold-clamping process. In this situation, unification of the structural body increases, and the dimensional accuracy of the structural body that contains the connecting hole(s) becomes high.

In the first and second teachings, it is preferable that the needle(s) comprise(s) a plurality of fourth carbon fibers extending in one direction within the fourth matrix composed of the fourth thermoplastic resin. In this situation, the needles can be used, as is, as rivets made of CFRTP.

In the first and second teachings, it is preferable to make the first direction and the second direction to be orthogonal in the setting process. In this situation, a high strength structural body is obtained without the need to weave the carbon fibers.

In the first and second teachings, the first pre-preg and the second pre-preg can be rod-shaped, and the specific area can be a portion where the first pre-preg and the second pre-preg cross. In this situation, if a truss or lattice-shaped structural body is formed, because joining holes are also formed in the crossing portion, the joined structural body is widely applicable in automobiles, aircraft, spacecraft, ships, trains, buildings, and the like.

In the joined structural body according to the third teaching, because the rivet(s) as well is (are) made of CFRTP, high peel strength is exhibited in the third direction. The shaft body or intermediate body disclosed in Japanese Patent No. 6840410 or Japanese Patent No. 6901063 can be used as the CFRTP rivet(s), and the fastening method and fastening apparatus disclosed in these references can be used.

In the third teaching, the opposing material may be of metal, CFRTP, or thermosetting CFRP as long as the material has insertion holes that align with the joining holes.

Working Examples 1-3 embodying the present invention will be described below with reference to the drawings.

### (Working Example 1)

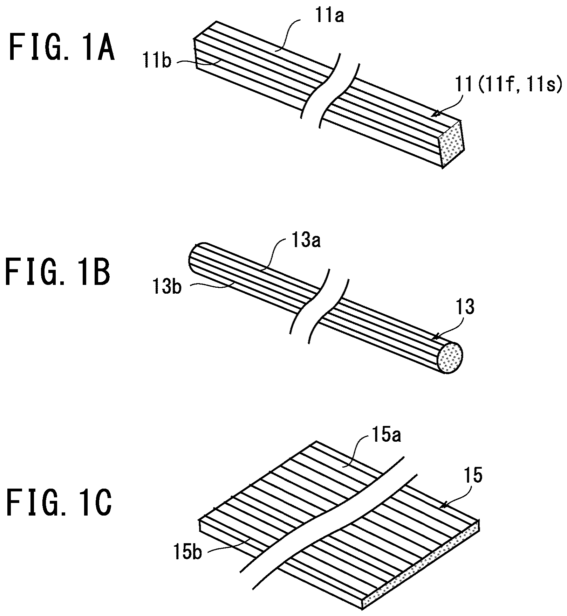

Working Example 1 embodies the first teaching and the third teaching, in which an injecting process is not carried out. First, in the preparing process, a plurality of pre-pregs 11 shown in FIG. 1(A) was prepared. These pre-pregs 11 are shaped like quadrangular-prism-shaped rods and have a plurality of carbon fibers 11b extending only in the length direction in matrices 11a. The matrices 11a are thermoplastic resin. These pre-pregs 11 correspond to first and second pre-pregs 11f, 11s, the matrices 11a correspond to first and second matrices 11a composed of first and second thermoplastic resins, and the carbon fibers 11b correspond to first and second carbon fibers 11b.

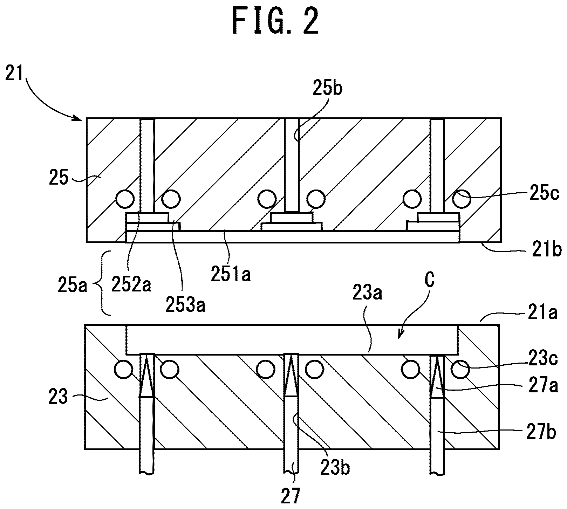

In addition, as shown in FIG. 2, a molding apparatus 21 was prepared. The molding apparatus 21 comprises a first mold 23, a second mold 25, and a plurality of needles 27. The first mold 23 and the second mold 25 can be moved relative to each other to clamp the mold.

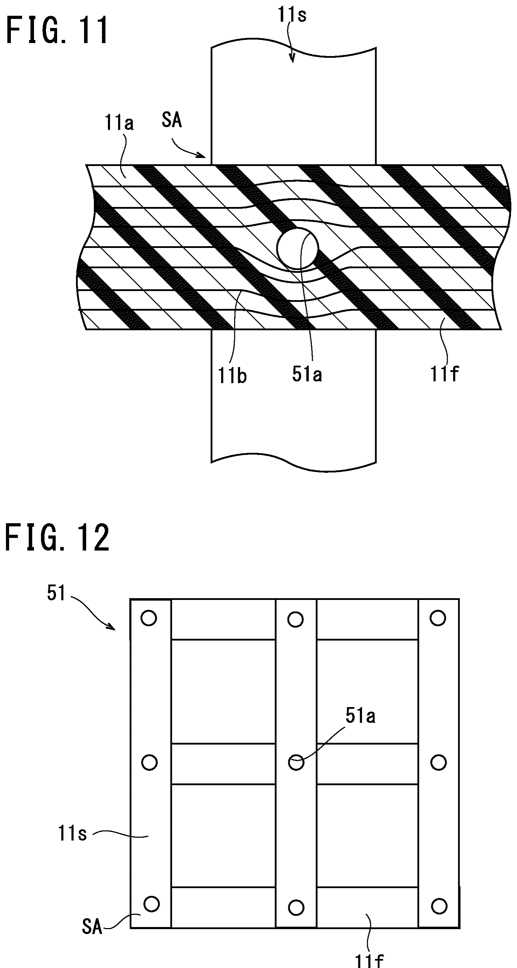

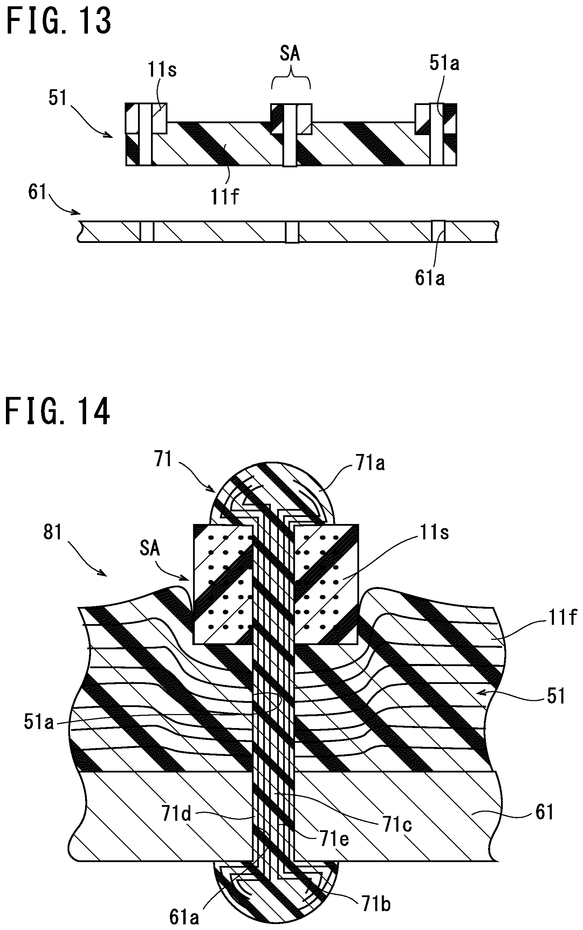

A first molding surface 23a, which is recessed from a mold parting surface 21a, is provided on the first mold 23. As shown in FIG. 12 and FIG. 13, the first molding surface 23a is made to fit three first pre-pregs 11f, which extend in the left-right direction of the paper plane. In Working Example 1, the left-right direction of the paper plane in FIG. 12 and FIG. 13 is the first direction.

As shown in FIG. 2, a second molding surface 25a, which is recessed from a mold parting surface 21b, is provided on the second mold 25. The first molding surface 23a of the first mold 23 and the second molding surface 25a of the second mold 25 form a cavity C. The second molding surface 25a has three first parts 251a, three second parts 252a, and numerous third parts 253a.

The first parts 251a face the first molding surface 23a and, as shown in FIG. 12 and FIG. 13, are made to fit the three first pre-pregs 11f in the left-right direction of the paper plane. The total of the depth of the first molding surface 23a from the mold parting surface 21a and the depth of the first parts 251a from the mold parting surface 21b is equal to the thickness of the first pre-pregs 11f.

As shown in FIG. 2, the second parts 252a are recessed so as to be continuous with the first parts 251a. The second parts 252a are made to fit three second pre-pregs 11s, which extend in the up-down direction of the paper plane in FIG. 12 and in the thickness direction of the paper plane in FIG. 13. In Working Example 1, the up-down direction of the paper plane in FIG. 12 and the thickness direction of the paper plane in FIG. 2 and FIG. 13 are the second direction. Consequently, the first pre-pregs 11f and the second pre-pregs 11s are orthogonal to each other and overlap in nine specific areas SA.

As shown in FIG. 2, the length from the bottom surface of the first molding surface 23a to the bottom surfaces of the second parts 252a is less than the total of the thickness of the first pre-pregs 11f and the thickness of the second pre-pregs 11s. Consequently, if the first mold 23 and the second mold 25 are clamped by bringing the mold parting surface 21a and the mold parting surface 21b together, then the first pre-pregs 11f and the second pre-pregs 11s are pressurized and become united at the specific areas SA; however, material of the first pre-pregs 11f and the second pre-pregs 11s overflows at the respective specific areas SA. Consequently, the third parts 253a are formed between the first parts 251a and the second parts 252a, and that material is molded by the respective third parts 253a.

Needle holes 23b, which extend vertically toward the respective specific areas SA, are provided through the first mold 23. In addition, needle holes 25b, which extend vertically toward the respective specific areas SA so as to coincide with the needle holes 23b, are provided through the second mold 25 as well. Needles 27 made of metal are provided in the respective needle holes 23b, 25b in a movable manner. A needle 27 is composed of a conically pointed tip portion 27a and a cylindrical part 27b, which extends in a cylindrical shape coaxially with the tip portion 27a. The needles 27 within the needle holes 23b project, starting with the tip portions 27a thereof, into the cavity C, and are capable of projecting until the cylindrical parts 27b are positioned within the cavity C.

In addition, heating holes 23c are formed around the respective needle holes 23b in the first mold 23. In addition, heating holes 25c are formed around the respective needle holes 25b in the second mold 25 as well. The heating holes 23c around the respective needle holes 23b and the heating holes 25c around the respective needle holes 25b are connected and made so that a heat-transfer medium-such as oil or the like having a prescribed temperature-circulates therethrough.

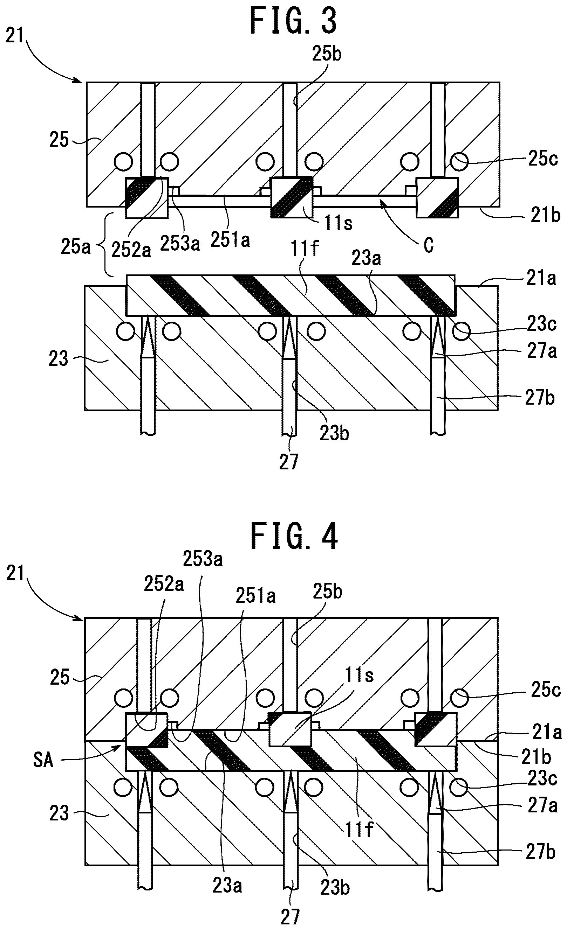

In the setting process, the first pre-pregs 11f and the second pre-pregs 11s are provided within the cavity C, as shown in FIG. 3. Specifically, the first pre-pregs 11f are fitted in the first molding surface 23a of the first mold 23, and the second pre-pregs 11s are fitted in the second parts 252a of the second mold 23. The first pre-pregs 11f and the second pre-pregs 11s are made to overlap in the respective specific areas SA in a third direction that is orthogonal to the first direction and the second direction. The up-down direction of the paper plane in FIG. 3 is the third direction.

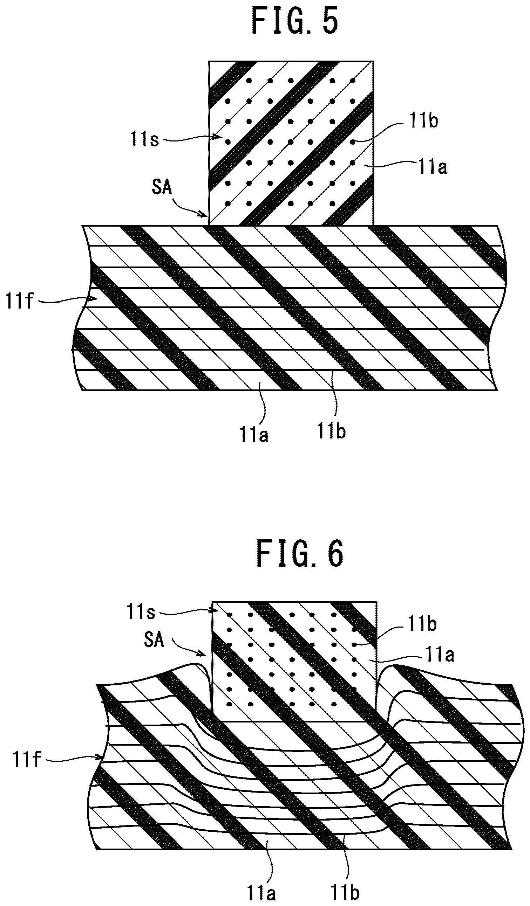

In the mold-clamping process and the pressurizing process, while the high-temperature heat-transfer medium is being circulated in the heating holes 23c, 25c, the first mold 23 and the second mold 25 are clamped, as shown in FIG. 4, and the first pre-pregs 11f and the second pre-pregs 11s are pressurized within the cavity C so as to unite them. At this time, the first pre-pregs 11f and the second pre-pregs 11s first make contact in the specific areas SA, as shown in FIG. 5. Furthermore, when the mold clamping of the first mold 23 and the second mold 25 is complete, the first pre-pregs 11f and the second pre-pregs 11s are pressurized at the specific areas SA, and material overflows as shown in FIG. 6. The material that overflowed is molded by the respective third parts 253a of the second mold 25.

During these periods of time, the first and second thermoplastic resins of the first and second pre-pregs 11f, 11s in the specific areas SA are softened owing to the temperature of the heat-transfer medium. The heating temperature is set, as appropriate, in accordance with the thermoplastic resins of the first and second pre-pregs 11f, 11s. Consequently, the first and second carbon fibers 11b deform comparatively flexibly, and the first and second carbon fibers 11b are not damaged. In this manner, the first matrix 11a of the first pre-pregs 11f and the second matrix 11a of the second pre-pregs 11s preferably become united by an insert PCM method, while damage to the first and second carbon fibers 11b is curtailed.

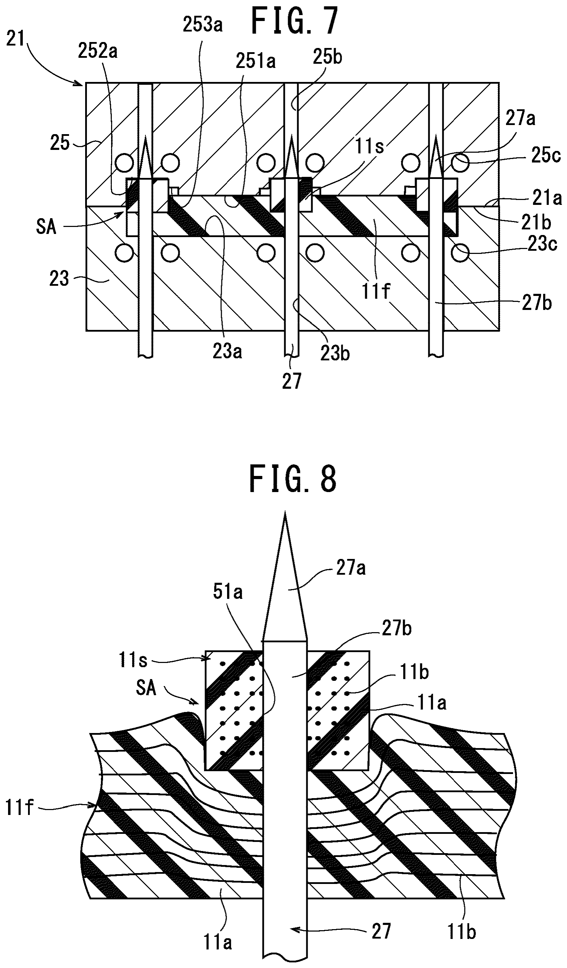

Furthermore, as the hole-forming process, the needles 27, starting from the tip portions 27a thereof, are caused to penetrate into the specific areas SA in the third direction, as shown in FIG. 7 and FIG. 8, while the high-temperature heat-transfer medium is circulated in the heating holes 23c, 25c. Thereby, the first carbon fibers 11b in the first pre-pregs 11f are gradually pushed aside within the first matrix 11a, by the tip portions 27a of the needles 27, in directions radially outward of the needles 27. In addition, the second carbon fibers 11b in the second pre-pregs 11s are also gradually pushed aside within the second matrix 11a, by the tip portions 27a of the needles 27, in directions radially outward of the needles 27.

During this period of time, the first and second thermoplastic resins of the first and second pre-pregs 11f, 11s in the specific areas SA are softened owing to the temperature of the heat-transfer medium. Consequently, the first and second carbon fibers 11b tend to be moved within the first and second matrices 11a by the tip portions 27a of the needles 27 and, thereby, further tend not to be cut. In this manner, connecting holes 51a, in which cutting of the surrounding first and second carbon fibers 11b is curtailed, are formed in an obtained structural body 51.

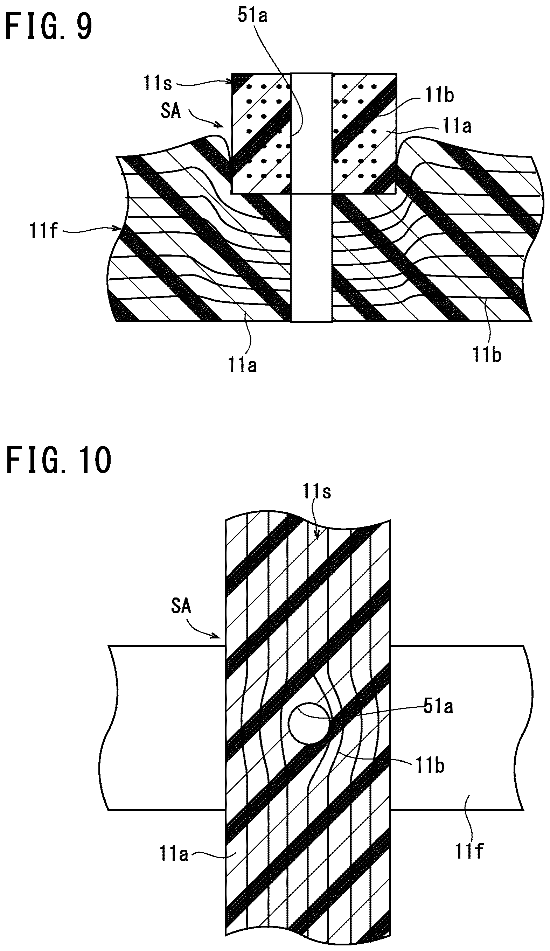

While leaving the needles 27 in the respective connecting holes 51a, the circulation of the high-temperature heat-transfer medium through the heating holes 23c, 25c is stopped, and a low-temperature heat-transfer medium is circulated through the heating holes 23c, 25c; or, the circulation of the high-temperature heat-transfer medium through the heating holes 23c, 25c is stopped, and time is allowed to elapse until the first and second thermoplastic resins in the specific areas SA became room temperature. Then, the first mold 23 and the second mold 25 are opened to obtain the structural body 51. The connecting holes 51a shown in FIG. 9 to FIG. 11 are formed in the structural body 51.

In addition, in this molding method, because the hole-forming process is carried out while the first pre-pregs 11f and the second pre-pregs 11s are restrained and united in the cavity C, the structural body 51 tends not to deform and has high dimensional accuracy. In addition, because the pressurizing process is carried out during the mold-clamping process, the molding-cycle time of the structural body 51 can be shortened, and it is possible to reduce manufacturing costs.

Because the structural body 51 is made of CFRTP, it is lightweight compared to a metal structural body yet high strength, and excels in fatigue characteristics and corrosion characteristics. In particular, because the first pre-pregs 11f comprise the plurality of first carbon fibers 11b extending in the first direction within the first matrix 11a composed of the first thermoplastic resin, and the second pre-pregs 11s comprise the plurality of second carbon fibers 11b extending in the second direction within the second matrix 11a composed of the first thermoplastic resin, the structural body 51 can exhibit high tensile strength in the first direction and the second direction. In addition, because the first direction and the second direction of the structural body 51 are orthogonal to each other, there was no need to weave the first and second carbon fibers 11b, and the structural body 51 has high strength. Furthermore, because the same kind of thermoplastic resin is used for the first pre-pregs 11f and the second pre-pregs 11s, the matrices 11a are easily softened in the mold-clamping process and the hole-forming process, and unification of the structural body 51 is easy to achieve.

Furthermore, in a joining process, the structural body 51 obtained in Working Example 1 and an opposing material 61 are joined by rivets 71 made of CFRTP to form a joined structural body 81, as shown in FIG. 14. At this time, the fastening method and the fastening apparatus disclosed in Japanese Patent No. 6840410 or Japanese Patent No. 6901063 will be used.

A rivet 71 is composed of a first head portion 71a, a second head portion 71b, and a shaft portion 71c, which is integral with the first head portion 71a and the second head portion 71b. The first head portion 71a, the second head portion 71b, and the shaft portion 71c are composed of a fifth matrix 71d composed of the fifth thermoplastic resin and fifth carbon fibers 71e extending in the third direction. Although a metal plate is used as the opposing material 61 here, the opposing material 61 may be CFRTP or thermosetting CFRP.

In the joined structural body 81 thus obtained, because the rivets 71 as well are made of CFRTP, and, in particular, the fifth carbon fibers 71e in the first head portions 71a, the second head portions 71b, and the shaft portions 71c are not cut, high peel strength is exhibited in the third direction as well.

It is also possible for the needles 27 in Working Example 1 to be made not of metal, but of CFRTP, and to be left in the structural body 51, and for the joined structural body 81 to be formed by joining the structural body 51 and the opposing material 61 by deforming the needles 27 into the rivets 71.

Although the first and second thermoplastic resins were heated and softened in the pressing process and the hole-forming process in the above-mentioned Working Example 1, the pressurizing process and the hole-forming process can also be carried out at room temperature, depending on the types of the first and second thermoplastic resins.

In addition, although the hole-forming process was carried out after the pressurizing process in the above-mentioned Working Example 1, the hole-forming process may be carried out at the same time as the pressurizing process. In this situation, the molding-cycle time of the structural body 51 can be shortened, and manufacturing costs can be reduced.

It is noted that heater wires may be provided in the heating holes 23c or the heating holes 25c of the molding apparatus 21. In addition, the needles 27 alone may be heated and inserted through the needle holes 23b, 25b without providing the heating holes 23c and the heating holes 25c in the first mold 23 and the second mold 25.

### (Working Example 2)

Working Example 2 embodies the second teaching and the third teaching, in which second pre-pregs are not prepared. First, in the preparing process, the plurality of pre-pregs 11 shown in FIG. 1(A) were prepared, as in Working Example 1.

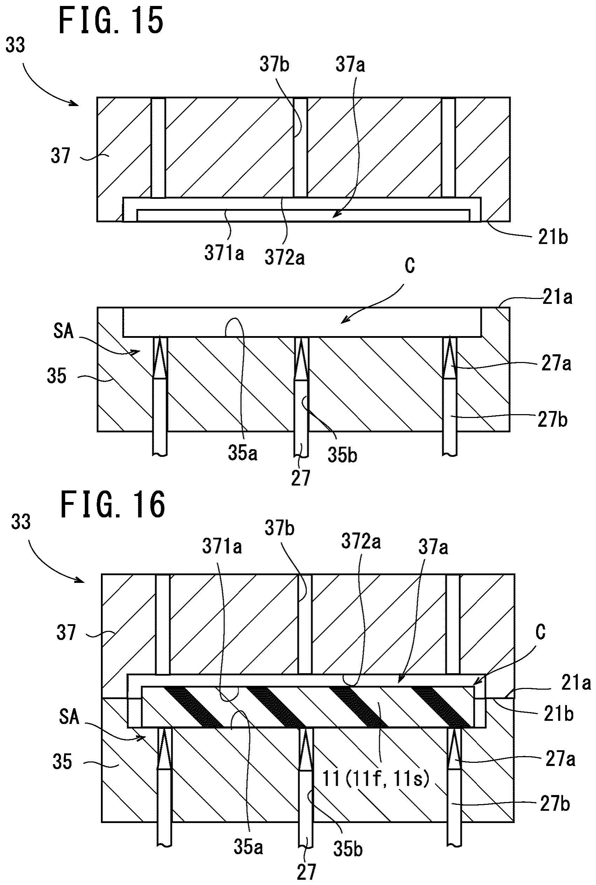

In addition, as shown in FIG. 15, a molding apparatus 33 was prepared. The molding apparatus 33 comprises a first mold 35, a second mold 37, and the plurality of needles 27. The first mold 35 and the second mold 37 are made so that they can move relative to each other to clamp the mold.

A first molding surface 35a, which is recessed from the mold parting surface 21a, is provided on the first mold 35. As in Working Example 1, the first molding surface 35a is made to fit three first pre-pregs 11f, which extend in the left-right direction of the paper plane.

A second molding surface 37a, which is recessed from the mold parting surface 21b, is provided on the second mold 37. The first molding surface 35a of the first mold 35 and the second molding surface 37a of the second mold 37 form the cavity C. The second molding surface 37a is composed of three first parts 371a and a second part 372a.

The first parts 371a face the first molding surface 35a and are made to fit the three pre-pregs 11 in the left-right direction of the paper plane. The total of the depth of the first molding surface 35a from the mold parting surface 21a and the depth of the first parts 371a from the mold parting surface 21b is equal to the thickness of the pre-pregs 11. In the situation in which the bottom surfaces of the respective pre-pregs 11 contact the bottom surface of the first molding surface 35a, the second part 372a is separated from the upper surfaces, the right surfaces, the left surfaces, the front surfaces, and the rear surfaces of the respective pre-pregs 11.

Needle holes 35b, 37b are formed in the first and second molds 35, 37. The configuration of the needle holes 35b, 37b is the same as that of the needle holes 23b, 25b in Working Example 1. Heating holes 23c, 25c, such as those in the first and second molds 23, 25 in Working Example 1, are not formed in the first and second molds 35, 37. Other structural elements of the molding apparatus 33 are the same as those of the molding apparatus 21 in Working Example 1.

In addition, an injection material 39 was prepared. The injection material 39, which contains the third thermoplastic resin, is put into a molten state and injected into the cavity C from a gate, which is not shown in the drawings. The third thermoplastic resin of the injection material 39 has a higher melting point than the thermoplastic resin of the pre-pregs 11.

In the setting process, the pre-pregs 11 are provided within the cavity C, as shown in FIG. 16. In addition, in the mold-clamping process, the first mold 35 and the second mold 37 will be clamped.

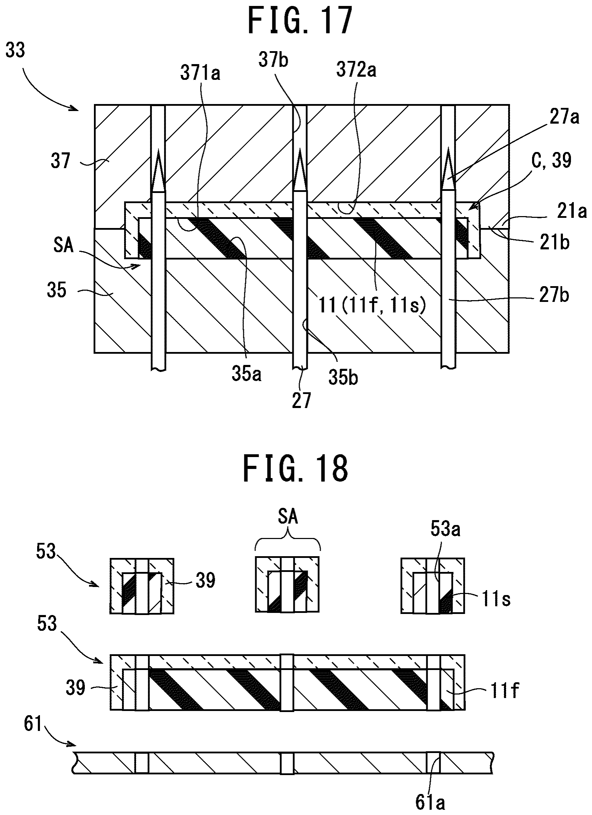

Furthermore, as the injecting process and the hole-forming process, the injection material 39 will be injected into the cavity C, as shown in FIG. 17. At the same time, the needles 27, starting from the tip portions 27a thereof, are caused to penetrate into the specific areas SA in the third direction such that the cylindrical parts 27b of the needles 27 reach the needle holes 37b while also penetrating the injection material 39 in the cavity C. Consequently, the carbon fibers 11b in the pre-pregs 11 are gradually pushed aside within the matrices 11a, by the tip portions 27a of the needles 27, in directions radially outward of the needles 27. Consequently, the carbon fibers 11b of the pre-pregs 11 tend not to be cut.

At this time, because the injecting process is carried out during the hole-forming process, the thermoplastic resin in the specific areas SA is softened owing to the temperature of the injection material 39, and the carbon fibers 11b tend to be moved within the matrices 11a by the tip portions 27a of the needles 27 and thus also tend not to be cut. The need to soften the thermoplastic resin in the specific areas SA during this period can be eliminated. In addition, even if connecting holes 53a formed in the pre-pregs 11 by the needles 27 have become non-preferable shapes, because the injection material 39 is injected in the injecting process while the needles 27 are left in the connecting holes 53a, the method becomes an insert injection-molding method and the connecting holes 53a can be made into preferable shapes by the injection material 39. In addition, if the injecting process is carried out during the hole-forming process, then the molding-cycle time of structural bodies 53 can be shortened, and manufacturing costs can be reduced.

The thermoplastic resin and the injection material 39 are brought to room temperature, and the first mold 35 and the second mold 37 are opened to obtain the structural bodies 53. The obtained structural bodies 53 is composed of the pre-pregs 11 and the injection material 39, which was provided on the five surfaces of the pre-pregs 11 other than the bottom surfaces thereof. In each of the structural bodies 53, cutting of the surrounding carbon fibers 11b is curtailed, and the connecting holes 53a having a preferable shape are formed.

As shown in FIG. 18, three of the structural bodies 53 were aligned in the thickness direction of the paper plane, the three structural bodies 53 were aligned in the left-right direction, and, as in Working Example 1, the opposing material 61 was prepared. The pre-pregs 11 of the structural bodies 53 aligned in the thickness direction of the paper plane correspond to the first pre-pregs 11f, and the pre-pregs 11 of the structural bodies 53 aligned in the left-right direction of the paper plane correspond to the second pre-pregs 11s.

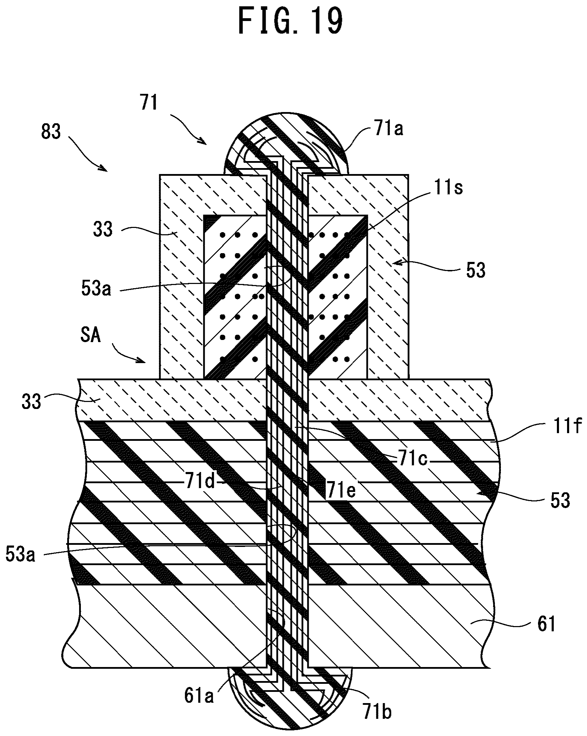

Then, as shown in FIG. 19, the respective structural bodies 53 and the opposing material 61 were joined by the rivets 71 made of CFRTP, as in Working Example 1. In this manner, a joined structural body 83 was obtained.

The structural bodies 53 in Working Example 2 can also exhibit functions and effects similar to those in Working Example 1. In addition, the joined structural body 83 in Working Example 2 can also exhibit functions and effects similar to those in Working Example 1.

It is also possible for the needles 27 in Working Example 2 to be made not of metal, but of CFRTP, and to be left in the structural bodies 53, and for the joined structural body 83 to be formed by joining the structural bodies 53 and the opposing material 61 by deforming the needles 27 into the rivets 71.

Although the injecting process was carried out during the hole-forming process in Working Example 2, the injecting process may be carried out before the hole-forming process or after the hole-forming process. In the situation in which the injecting process will be carried out after the hole-forming process, the needles 27 should be left in the cavity C to also mold connecting holes in the injection material 39.

### (Working Example 3)

Working Example 3 embodies the first teaching and the third teaching, in which an injecting process is carried out. In other words, Working Example 3 embodies the second teaching and the third teaching, in which the second pre-pregs are prepared. First, in the preparing process, the plurality of pre-pregs 11 shown in FIG. 1(A) was prepared, as in Working Examples 1 and 2.

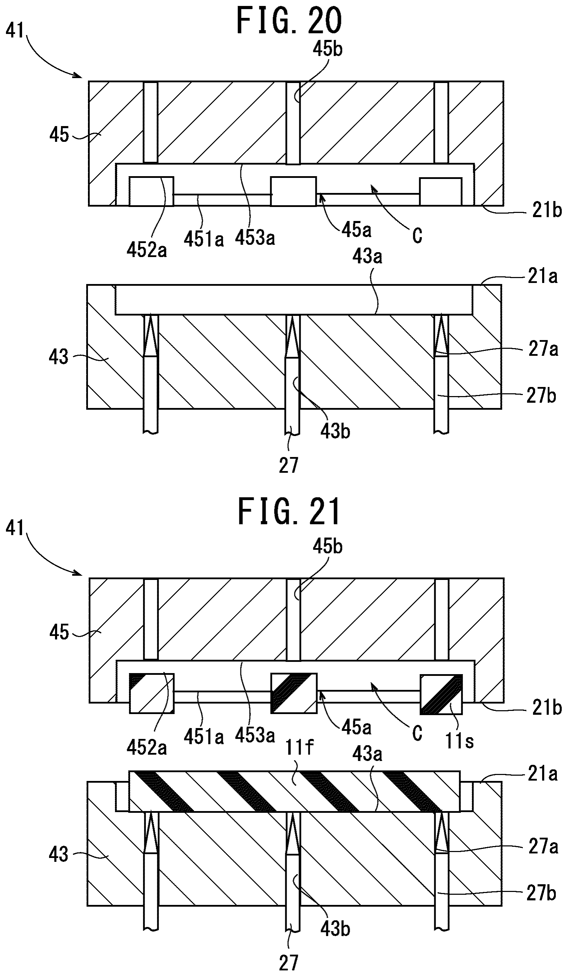

In addition, as shown in FIG. 20, a molding apparatus 41 was prepared. The molding apparatus 41 comprises a first mold 43, a second mold 45, and the plurality of needles 27. The first mold 43 and the second mold 45 are made so that they can move relative to each other to clamp the mold.

A first molding surface 43a, which is recessed from the mold parting surface 21a, is provided on the first mold 43. As in Working Example 1, the first molding surface 43a is made to fit the three first pre-pregs 11f, which extend in the left-right direction of the paper plane.

A second molding surface 45a, which is recessed from the mold parting surface 21b, is provided on the second mold 45. The first molding surface 43a of the first mold 43 and the second molding surface 45a of the second mold 45 will form the cavity C. The second molding surface 45a is composed of three first parts 451a, three second parts 452a, and a third part 453a.

The first parts 451a face the first molding surface 43a and are made to fit the three first pre-pregs 11f in the left-right direction of the paper plane. The total of the depth of the first molding surface 43a from the mold parting surface 21a and the depth of the first parts 451a from the mold parting surface 21b is equal to the thickness of the first pre-pregs 11f.

The second parts 452a are recessed so as to be continuous with the first parts 451a. The second parts 452a are made to fit three second pre-pregs 11s, which extend in the thickness direction of the paper plane in FIG. 20. Consequently, the first pre-pregs 11f and the second pre-pregs 11s are orthogonal to each other and overlap in nine specific areas SA.

In the situation in which the bottom surfaces of the first pre-pregs 11f contact the bottom surface of the first molding surface 43a, and the second pre-pregs 11s are fitted in the second parts 452a, the third part 453a is separated from the upper surfaces, the right surfaces, the left surfaces, the front surfaces, and the rear surfaces of the first pre-pregs 11f and the second pre-pregs 11s.

The length from the bottom surface of the first molding surface 43a to the bottom surfaces of the second parts 452a is less than the total of the thickness of the first pre-pregs 11f and the thickness of the second pre-pregs 11s. Consequently, if the first mold 43 and the second mold 45 are clamped by bringing the mold parting surface 21a and the mold parting surface 21b together, then the first pre-pregs 11f and the second pre-pregs 11s are pressurized and united in the specific areas SA; however, material of the first pre-pregs 11f and the second pre-pregs 11s overflows at the respective specific areas SA. Consequently, the material will bulge into the third part 453a.

Needle holes 43b, 45b are formed in the first and second molds 43, 45. The configuration of the needle holes 43b, 45b is the same as that of the needle holes 23b, 25b, 35b, 37b in Working Examples 1 and 2. The heating holes 23c, 25c, such as those in the first and second molds 23, 25 in Working Example 1, are not formed in the first and second molds 43, 45. Other structural elements of the molding apparatus 41 are the same as those of the molding apparatus 21 in Working Example 1.

In addition, an injection material 39 was prepared. The injection material 39, which contains the third thermoplastic resin, is put into a molten state and injected into the cavity C from a gate, which is not shown in the drawings. The third thermoplastic resin of the injection material 39 has a higher melting point than that of the first and second thermoplastic resins of the first and second pre-pregs 11f, 11s.

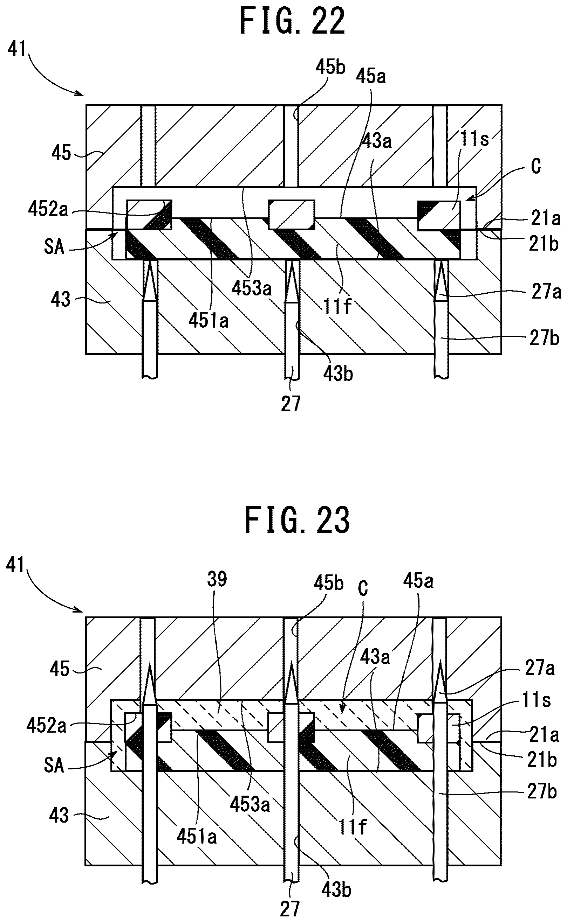

In the setting process, the first and second pre-pregs 11f, 11s were provided within the cavity C, as in Working Example 1, as shown in FIG. 21. In addition, in the mold-clamping process and the pressurizing process, the first mold 43 and the second mold 45 will be clamped, as shown in FIG. 22, and the first pre-pregs 11f and the second pre-pregs 11s will be pressurized so as to unite them within the cavity C.

Then, as the injecting process and the hole-forming process, the injection material 39 will be injected into the cavity C, as shown in FIG. 23. At the same time, the needles 27, starting from the tip portions 27a thereof, are caused to penetrate into the specific areas SA in the third direction such that the cylindrical parts 27b of the needles 27 reach the needle holes 37b while also penetrating the injection material 39 in the cavity C. Consequently, the first and second carbon fibers 11b in the first and second pre-pregs 11f, 11s are gradually pushed aside within the first and second matrices 11a, by the tip portions 27a of the needles 27, in directions radially outward of the needles 27. Consequently, the first and second carbon fibers 11b of the first and second pre-pregs 11f, 11s tend not to be cut.

At this time, because the injecting process is carried out during the hole-forming process, the first and second thermoplastic resins in the specific areas SA are softened owing to the temperature of the injection material 39, and the first and second carbon fibers 11b tend to be moved within the first and second matrices 11a by the tip portions 27a of the needles 27 and thus also tend not to be cut. The need to soften the first and second thermoplastic resins in the specific areas SA during this period can be eliminated. In addition, even if connecting holes 55a formed in the first and second pre-pregs 11f, 11s by the needles 27 have become non-preferable shapes, because the injection material 39 is injected in the injecting process while the needles 27 are left in the connecting holes 55a, the method becomes an insert injection-molding method and the connecting holes 55a can be made into preferable shapes by the injection material 39. In addition, if the injecting process is carried out during the hole-forming process, then the molding-cycle time of structural bodies 53 can be shortened, and manufacturing costs can be reduced.

The first and second thermoplastic resins and the injection material 39 are brought to room temperature, and the first mold 43 and the second mold 45 are opened to obtain structural bodies 55. The obtained structural bodies 55 are composed of the first and second pre-pregs 11f, 11s and the injection material 39, which was provided on the five surfaces of the first and second pre-pregs 11f, 11s other than the bottom surfaces thereof. In each of the structural bodies 55, cutting of the surrounding first and second carbon fibers 11b is curtailed, and the connecting holes 55a having a preferable shape are formed.

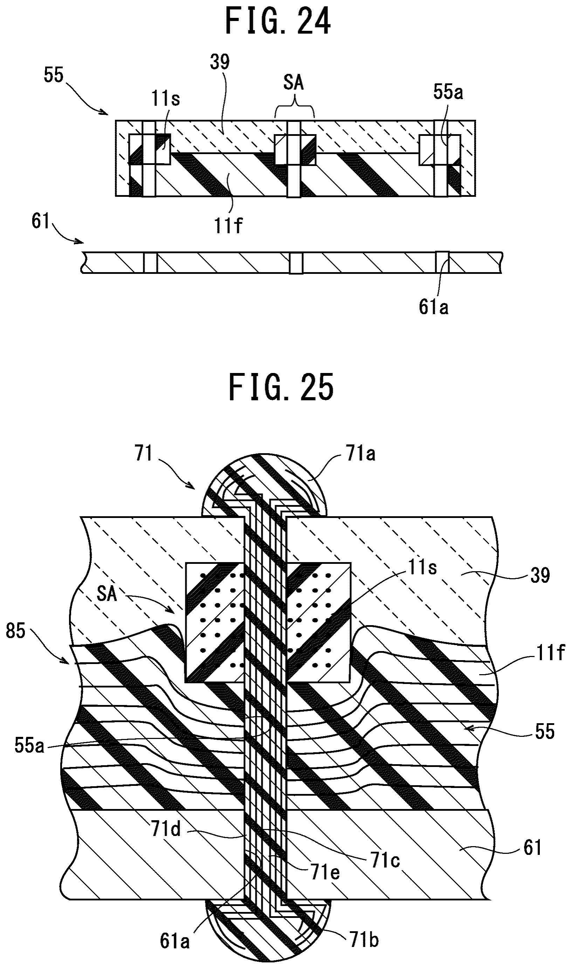

As shown in FIG. 24, three structural bodies 55 are aligned in the thickness direction of the paper plane, and, as in Working Examples 1 and 2, the opposing material 61 was prepared. Then, as shown in FIG. 25, the structural bodies 55 and the opposing material 61 were joined by the rivets 71 made of CFRTP, as in Working Examples 1 and 2. In this manner, a joined structural body 85 was obtained.

The structural bodies 55 in Working Example 3 can exhibit functions and effects similar to those in Working Examples 1 and 2. In addition, the joined structural body 85 in Working Example 3 can also exhibit functions and effects similar to those in Working Examples 1 and 2.

It is also possible for the needles 27 in Working Example 3 to be made not of metal, but of CFRTP, and to be left in the structural bodies 55, and for the joined structural body 85 to be formed by joining the structural bodies 55 and the opposing material 61 by deforming the needles 27 into the rivets 71.

In addition, although the injecting process was carried out during the hole-forming process in the above-mentioned Working Example 3 as well, the injecting process may be carried out before the hole-forming process or after the hole-forming process. In the situation in which the injecting process will be carried out before the hole-forming process or after the hole-forming process, the needles 27 should be left in the cavity C to also mold connecting holes in the injection material 39.

The inventors molded the plurality of structural bodies 53 according to Working Example 2 using PP (polypropylene) as the thermoplastic resin of the pre-pregs 11 and the injection material and manufactured a lattice-shaped joined structural body 83 from the respective structural bodies 53. As a cover member for a battery case, the joined structural body 83 is high strength while being lightweight and additionally excelled in fatigue characteristics and corrosion characteristics.

Although the present invention has been described above in accordance with Working Examples 1-3, the present invention is not limited to the above-mentioned Working Examples 1-3, and it goes without saying that the present invention can be modified for application, as appropriate, to the extent that such modifications do not depart from the gist of the invention.

For example, although the rod-shaped pre-pregs 11 having a quadrangular prism shape shown in FIG. 1(A) were used in Working Examples 1-3, a rod-shaped pre-preg 13 having a cylindrical shape shown in FIG. 1(B) may be used. The pre-preg 13 also comprises a plurality of carbon fibers 13b, which extend only in the length direction, in a matrix 13a. In addition, a sheet-shaped pre-preg 15 shown in FIG. 1(C) may be used. The pre-preg 15 also comprises a plurality of carbon fibers 15b, which extend only in the length direction, in a matrix 15a.

In addition, although the injection material 39 was provided on the five surfaces of the pre-pregs 11 or the first and second pre-pregs 11f, 11s, other than the bottom surfaces thereof, in Working Examples 2 and 3, the injection material may be provided on all surfaces of the pre-pregs 11 or the first and second pre-pregs 11f, 11s, or the injection material may be provided on only specific portions thereof.

In addition, according to the present invention, a structural body or joined structural body utilizing super-engineering plastic, in which low-melt PAEK is used as the thermoplastic resin of the pre-pregs and PEEK is used as the injection material, can be obtained in order to manufacture a lightweight, high-strength, high-heat-resistant, and high-wear-resistant component or the like.

It is noted that, although the above-mentioned first and second pre-pregs 11, 13, and 15 have the carbon fibers 11b, 13b, and 15b, which extend only in the length direction, the first and second pre-pregs may have carbon fibers that twist while extending in the length direction.

### Industrial Applicability

The present invention is applicable to components in fields such as automobiles, aircraft, spacecraft, ships, trains, and buildings.

### EXPLANATION OF THE REFERENCE NUMBERS

- 11a, 13a, 15a: Matrices (first matrix, second matrix)
- 11b, 13b, 15b, 71e: Carbon fibers (first carbon fibers, second carbon fibers, 71e: fourth carbon fibers)
- 11, 13, 15: Pre-pregs (11f: first pre-preg, 11s: second pre-preg)
- 23, 35, 43: First molds
- C: Cavity
- 25, 37, 45: Second molds
- 27a: Tip portion
- 27: Needle
- SA: Specific area
- 51a, 53a, 55a: Connecting holes
- 51, 53, 55: Structural bodies
- 39: Injection material
- 61a: Insertion hole
- 61: Opposing material
- 71: Rivet
- 81, 83: Joined structural bodies

## Claims

1. A structural-body molding method comprising:
a preparing process that prepares: a first pre-preg, which comprises a plurality of first carbon fibers that extend in one direction within a first matrix composed of a first thermoplastic resin; a second pre-preg, which comprises a plurality of second carbon fibers that extend in one direction within a second matrix composed of a second thermoplastic resin; a first mold; a second mold that, together with the first mold, forms a cavity; and a needle that has a pointed tip portion;
a setting process that: provides the first pre-preg within the cavity; and provides the second pre-preg within the cavity such that a first direction, in which the first carbon fibers extend, and a second direction, in which the second carbon fibers extend, cross and such that the first and second carbon fibers overlap, within a specific area, in a third direction that is orthogonal to the first direction and the second direction;
a mold-clamping process that clamps the first mold and the second mold after the setting process;
a pressurizing process that pressurizes the first pre-preg and the second pre-preg within the cavity, during the mold-clamping process or after the mold-clamping process, so as to unite them; and
a hole-forming process that causes the needle, starting from the tip portion thereof, to penetrate into the specific area in the third direction, during the pressurizing process or after the pressurizing process, and form a connecting hole using the needle.

2. The structural-body molding method according to claim 1, wherein:
an injection material, which contains a third thermoplastic resin and is injected into the cavity, is prepared in the preparing process; and
comprising an injecting process that injects the injection material into the cavity before the hole-forming process, during the hole-forming process, or after the hole-forming process.

3. The structural-body molding method according to claim 2, wherein the third thermoplastic resin has a higher melting point than the first thermoplastic resin and the second thermoplastic resin.

4. The structural-body molding method according to any one of claims 1-3, wherein, in the pressurizing process, the first thermoplastic resin and the second thermoplastic resin in the specific area are heated so as to soften them.

5. The structural-body molding method according to any one of claims 1-4, wherein, in the hole-forming process, the first thermoplastic resin and the second thermoplastic resin in the specific area are heated so as to soften them.

6. A structural-body molding method comprising:
a preparing process that prepares: a first pre-preg, which comprises a plurality of first carbon fibers that extend in one direction within a first matrix composed of a first thermoplastic resin; a first mold; a second mold that, together with the first mold, forms a cavity; a needle that has a pointed tip portion; and an injection material that contains a third thermoplastic resin and is injected into the cavity;
a setting process that provides the first pre-preg within the cavity;
a mold-clamping process that clamps the first mold and the second mold after the setting process;
a hole-forming process that causes the needle, starting from the tip portion thereof, to penetrate into a specific area of the first pre-preg in a third direction that is orthogonal to a first direction and form a connecting hole using the needle; and
an injecting process that injects the injection material into the cavity before the hole-forming process, during the hole-forming process, or after the hole-forming process.

7. The structural-body molding method according to claim 6, wherein the third thermoplastic resin has a higher melting point than the first thermoplastic resin.

8. The structural-body molding method according to claim 6, wherein:
a second pre-preg, which comprises a plurality of second carbon fibers that extend in one direction within a second matrix composed of a second thermoplastic resin, is prepared in the preparing process;
in the setting process, the second pre-preg is provided in the cavity such that the first direction, in which the first carbon fibers extend, and a second direction, in which the second carbon fibers extend, cross in the specific area, and such that they overlap in the third direction; and
in the hole-forming process, the needle, starting from the tip portion thereof, is caused to penetrate into the specific area in the third direction and form a connecting hole using the needle.

9. The structural-body molding method according to claim 8, wherein the third thermoplastic resin has a higher melting point than the first thermoplastic resin and the second thermoplastic resin.

10. The structural-body molding method according to claim 8 or 9, comprising a pressurizing process that pressurizes the first pre-preg and the second pre-preg, during the mold-clamping process, so as to unite them within the cavity.

11. The structural-body molding method according to any one of claims 1-10, wherein the needle comprises a plurality of fourth carbon fibers that extend in one direction within a fourth matrix composed of a fourth thermoplastic resin.

12. The structural-body molding method according to any one of claims 1-5 or claims 8-10, wherein the first direction and the second direction are made to be orthogonal in the setting process.

13. The structural-body molding method according to claim 12, wherein:
the first pre-preg and the second pre-preg have rod shapes; and
the specific area is a portion in which the first pre-preg and the second pre-preg cross.

14. A joined structural body comprising:
the structural body obtained by the molding method according to claims 1-13; and an opposing material that is layered with the structural body and has an insertion hole that aligns with the joining hole;
wherein a rivet, which joins the structural body and the opposing material and comprises a plurality of fifth carbon fibers that extend in one direction within a fifth matrix composed of a fifth thermoplastic resin, is provided in the connecting hole and the insertion hole.
